# EUROPEAN PATENT APPLICATION

(11) **EP 2 528 394 A1**
(43) Date of publication of application: **28.11.2012**
(21) Application number: 11734768.2
(22) Date of filing: 21.01.2011
(51) Int. Cl.: H04W 48/18, H04W 36/30, H04W 36/38

(54) **MOBILE COMMUNICATION SYSTEM, NETWORK APPARATUS AND MOBILE COMMUNICATION METHOD**

(30) Priority: 21.01.2010 JP 2010011185
(71) Applicant: NTT DOCOMO, INC., Chiyoda-ku Tokyo 100-6150 (JP)
(72) Inventor: NAKAMURA, Yuichiro, Tokyo 100-6150 (JP); AOYAGI, Kenichiro, Tokyo 100-6150 (JP); KAWABE, Yasuhiro, Tokyo 100-6150 (JP); MATSUTANI, Hideyuki, Tokyo 100-6150 (JP)
(74) Representative: HOFFMANN EITLE
(86) International application number: PCT/JP2011/051099
(87) International publication number: WO 2011/090162

(57) **Abstract**

A network apparatus 20 includes a management unit 22 configured to manage each of a plurality of second cells provided in the second communication system and a priority level in association with each other, the priority level weighted depending on whether a connection to each of the plurality of second cells has succeeded or failed, and a selection unit 23 configured to select a connection destination cell with which the mobile communication terminal is to be connected among the plurality of second cells based on the priority level associated with each of the plurality of second cells.

## Description

### TECHNICAL FIELD

The present invention relates to a mobile communication system having a mobile communication terminal, a first communication system and a second communication system, a network apparatus used in the mobile communication system, and a mobile communication method.

### BACKGROUND ART

Recently, there has been known a method of switching a communication system, with which a mobile communication terminal communicates, between multiple communication systems. The communication systems include, for example, a communication system supporting UMTS (Universal Mobile Telecommunication System) and a communication system supporting LTE (Long Term Evolution).

Here, possible methods of switching the communication system with which the mobile communication terminal communicates between the multiple communication systems are (1) Inter-RAT (Radio Access Technology) handover and (2) redirection.

(1) In the Inter-RAT handover, a handover is performed between multiple communication systems with the communication systems exchanging information (RAT information) required for a handover therebetween without disconnecting the communication. However, the RATs provided in the respective communication systems have to be consistent, and there are many functions to implement the Inter-RAT handover.

(2) In the redirection, when the redirection is executed, a mobile communication terminal shifts to a stand-by state (Idle state) and tries to connect to a new communication system (e.g. , PATENT DOCUMENT 1). A message for implementing the redirection is, for example, "RRC Connection Reject" which rejects "RRC Connection Request" or "RRC Connection Release" transmitted to a mobile communication terminal at the end of the communication. Here, in the LTE, the redirection is executed using "RRC Connection Release."

### PRIOR ART DOCUMENT

### PATENT DOCUMENT

PATENT DOCUMENT 1: Japanese Patent Translation Publication No. 2009-510969

### SUMMARY OF THE INVENTION

In this respect, the Inter-RAT handover or the redirection encounters a possible case where a trial is made to connect a handover target communication system without knowing a failure or congestion in the handover target communication system.

Accordingly, in such a case, the connection to the handover target communication system may fail due to the failure or congestion in the handover target communication system.

Here, in the case where the failure or congestion of the handover target communication system is not known, the mobile communication terminal may probably try to connect to the handover target communication system further repeatedly. Accordingly, the connectivity of the mobile communication terminal to the communication system is deteriorated, and thus the performance of services provided to the mobile communication terminal is deteriorated.

For this reason, the present invention has been made with a view to solving the above problem. Accordingly, an objective of the present invention is to provide a mobile communication system, a network apparatus, and a mobile communication method which are capable of suppressing the deterioration in the connectivity of the mobile communication terminal to the communication system.

A mobile communication system according to the first feature has a mobile communication terminal, a first communication system, and a second communication system. The first communication system includes a management unit configured to manage each of a plurality of second cells provided in the second communication system and a priority level in association with each other, the priority level weighted depending on whether a connection to each of the plurality of second cells has succeeded or failed, and a selection unit configured to select a connection destination cell with which the mobile communication terminal is to be connected among the plurality of second cells based on the priority level associated with each of the plurality of second cells.

In the first feature, the first communication system further includes a transmission unit configured to send the mobile communication terminal a quality measurement instruction instructing the mobile communication terminal to measure a quality of the connection destination cell before trying to connect to the second communication system, and a reception unit configured to receive a quality measurement result of the connection destination cell from the mobile communication terminal.

In the first feature, the connection to the second communication system is an Inter-RAT handover from the first communication system to the second communication system.

In the first feature, the connection to the second communication system is a redirection to the second communication system.

A network apparatus according to the second feature is provided in a first communication system in a mobile communication system having a mobile communication terminal, the first communication system, and a second communication system. The network apparatus includes a management unit configured to manage each of a plurality of second cells provided in the second communication system and a priority level in association with each other, the priority level weighted depending on whether a connection to each of the plurality of second cells has succeeded or failed, and a selection unit configured to select a connection destination cell with which the mobile communication terminal is to be connected among the plurality of second cells based on the priority level associated with each of the plurality of second cells.

A mobile communication according to the third feature method applied to a mobile communication system having a mobile communication terminal, a first communication system, and a second communication system. The mobile communication method includes the steps of: managing each of a plurality of second cells provided in the second communication system and a priority level in association with each other, the priority level weighted depending on whether a connection to each of the plurality of second cells has succeeded or failed, and
selecting a connection destination cell with which the mobile communication terminal is to be connected among the plurality of second cells based on the priority level associated with each of the plurality of second cells.

### BRIEF DESCRIPTION OF DRAWINGS

[Fig. 1] Fig. 1 is a drawing showing a mobile communication system 100 according to a first embodiment.
[Fig. 2] Fig. 2 is a drawing showing an example of a cell configuration according to the first embodiment.
[Fig. 3] Fig. 3 is a drawing showing a network apparatus 20 according to the first embodiment.
[Fig. 4] Fig. 4 is a table showing a management table according to the first embodiment.
[Fig. 5] Fig. 5 is a sequence diagram showing an operation of the mobile communication system 100 according to the first embodiment.
[Fig. 6] Fig. 6 is a sequence diagram showing an operation of the mobile communication system 100 according to the first embodiment.
[Fig. 7] Fig. 7 is a sequence diagram showing an operation of the mobile communication system 100 according to the first embodiment.
[Fig. 8] Fig. 8 is a sequence diagram showing an operation of the mobile communication system 100 according to the first embodiment.
[Fig. 9] Fig. 9 is a flowchart showing an operation of the network apparatus 20 according to the first embodiment.
[Fig. 10] Fig. 10 is a flowchart showing an operation of the network apparatus 20 according to the first embodiment.
[Fig. 11] Fig. 11 is a drawing showing a network apparatus 20 according to Modification 1.
[Fig. 12] Fig. 12 is a flowchart showing an operation of the network apparatus 20 according to Modification 1.

### MODE FOR CARRYING OUT THE INVENTION

A mobile communication system according to an embodiment of the invention is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or percentages of sizes of the drawings are different with respect to one another.

### [Summary of Embodiment]

A mobile communication system according to an embodiment has a mobile communication terminal, a first communication system and a second communication system. The first communication system has a management unit and a selection unit. The management unit is configured to manage each of multiple second cells and a priority level in association with each other. The multiple second cells are provided in the second communication system and the priority level weighted depending on whether a connection to each of the multiple second cells has succeeded or failed. The selection unit is configured to select a connection destination cell with which the mobile communication terminal is to be connected based on the priority level associated with each of the multiple second cells.

In the embodiment, the selection unit selects a connection destination cell with which the mobile communication terminal is to be connected based on the priority level weighted depending on whether a connection to each of the multiple second cells has succeeded or failed. Accordingly, occurrence of repeated trials to connect to a handover target communication system is suppressed, though such repeated trials would occur with inappropriate selection of a connection destination cell even in a state where there is no failure or congestion in the handover target communication system. This can suppress deterioration in the connectivity of the mobile communication terminal to the communication system.

Note that in the embodiment, the connection to the second communication system is the Inter-RAT handover from the first communication system to the second communication system or the redirection to the second communication system.

### [First Embodiment]

### (Configuration of Mobile Communication System)

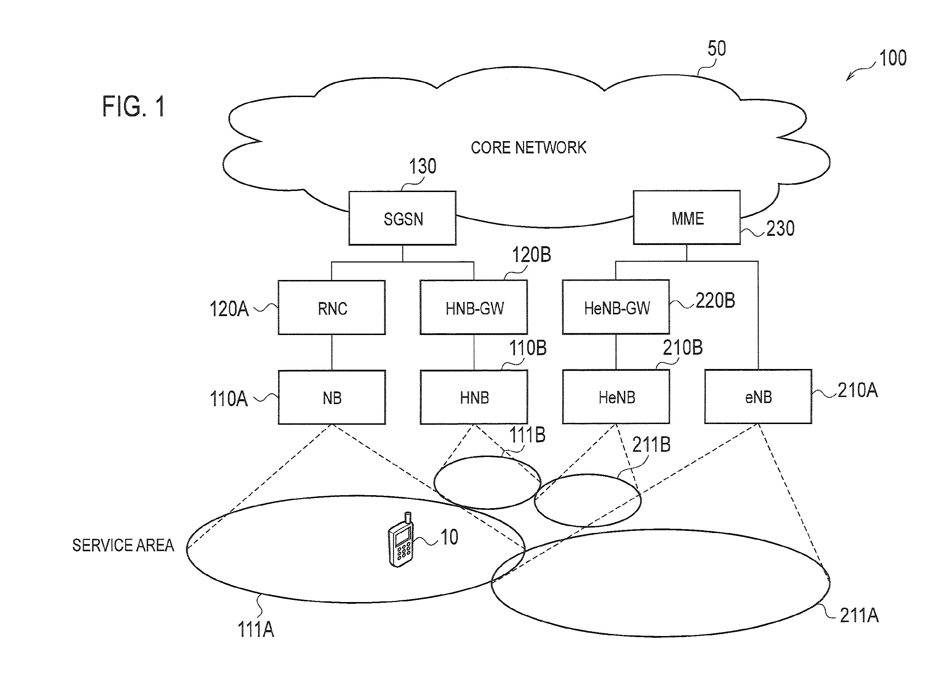

The configuration of a mobile communication system according to a first embodiment is described below by referring to the drawings. Fig. 1 is a drawing showing a mobile communication system 100 according to the first embodiment.

As shown in Fig. 1, the mobile communication system 100 includes a mobile terminal device 10 (hereinafter, UE 10) and a core network 50. In addition, the mobile communication system 100 includes a first communication system and a second communication system.

For example, the first communication system 100 is a communication system supporting UMTS (Universal Mobile Telecommunication System). The first communication system has a base station 110A (hereinafter NB 110A), a home base station 110B (hereinafter HNB 110B), a RNC 120A, a home base station gateway 120B (hereinafter, HNB-GW 120B), and an SGSN 130.

Note that a radio access network (UTRAN; Universal Terrestrial Radio Access Network) supporting the first communication system includes the NB 110A, HNB 110B, RNC 120A, and HNB-GW 120B.

For example, the second communication system is a communication system supporting LTE (Long Term Evolution). The second communication system has, for example, a base station 210A (hereinafter eNB 210A), a home base station 210B (hereinafter HeNB 210B), a home base station gateway 220B (hereinafter, HeNB-GGV 220B), and an MME 230.

Note that a radio access network (E-UTRAN; Evoled Universal Terrestrial Radio Access Network) supporting the second communication system includes the eNB 210A, HeNB 210B, and HeNB-GW 220B.

The UE 10 is a device (User Equipment) configured to communicate with the first communication system or the second communication system. For example, the UE 10 has a function to perform radio communications with the NB 110A and the HNB 110B. Or, the UE 10 has a function to perform radio communications with the eNB 210A and the HeNB 210B.

The NB 110A is a device (NodeB) having a macrocell 111A and configured to perform radio communications with the UE 10 present in the macrocell 111A.

The HNB 110B is a device (Home NodeB) having a specific cell 111B and configured to perform radio communications with the UE 10 present in the specific cell 111B.

The RNC 120A is a device (Radio Network Controller) connected with the NB 110A and configured to establish a radio connection (RRC Connection) with the UE 10 present in the macrocell 111A.

The HNB-GW 120B is a device (Home NodeB Gateway) connected with the HNB 110B and configured to establish a radio connection (RRC Connection) with the UE 10 present in the specific cell 111B.

The SGSN 130 is a device (Serving GPRS Support Node) configured to exchange packets in a packet exchange domain. The SGSN 130 is provided in the core network 50. Although omitted in Fig. 1, a device (MSC; Mobile Switching Center) to perform line switching in a line switching domain may be provided in the core network 50.

The eNB 210A is a device (evolvedNodeB) having a macrocell 211A and configured to perform radio communications with the UE 10 present in the macrocell 211A.

The HeNB 210B is a device (Home evolved NodeB) having a specific cell 211B and configured to perform radio communications with the UE 10 present in the specific cell 211B.

The HeNB-GW 220B is a device (Home evolved NodeB Gateway) connected with the HeNB 210B and configured to manage the HeNB 210B.

The MME 230 is a device (Mobility Management Entity) connected with the eNB 210A and configured to manage the mobility of the UE 10 establishing the radio connection with the HeNB 210B. Also, the MME 230 is a device connected with the HeNB 210B via the HeNB-GW 220B and configured to manage the mobility of the UE 10 establishing the radio connection with the HeNB 210B.

Note that the macrocell and the specific cell should be understood as functions to perform radio communications with the UE 10. However, the macrocell and the specific cell are also used as terms to express a service area of a cell. Also, a cell such as the macrocell or the specific cell is identified by a frequency, spread code, or time slot, which is used in a cell.

The specific cell is sometimes referred to as a femtocell, CSG (Closed Subscriber Group), or a home cell. Also, the specific cell is configured to be settable at an access type for defining UEs 10 allowed to access the specific cell. The access type is "Closed," "Hybrid," or "Open."

The "Closed" specific cell is configured to permit only a specific user (UE; User Equipment) managed by the specific cell to receive provision of services.

The "Hybrid" specific cell is configured to permit a specific user managed by the specific cell to perform communications with a high quality and is configured to permit a non-specific user not managed by the specific cell to perform communications with a best effort quality, for example.

The "Open" specific cell is configured to permit all the UEs 10 to receive provision of services, as is the case with the macrocell Here, in the "Open" cell, UEs 10 can perform communications with equal quality without being distinguished as to whether the UEs 10 are managed by the specific cell.

Note that the access type may be an "ACCESS CLASS BARRED" to prohibit an access of the UE 10 for each access class, or a "CELL BARRED" to prohibit an access of the UE 10 for each cell.

### (Example of Cell Configuration)

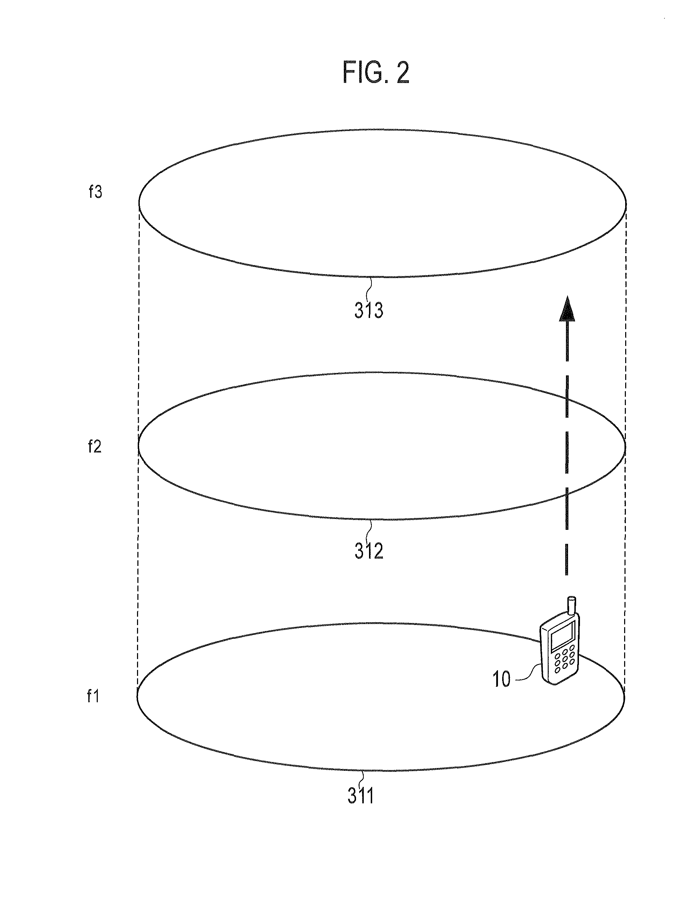

An example of a cell configuration according to the first embodiment is described below by referring to the drawings. Fig. 2 is a drawing showing an example of a cell configuration according to the first embodiment. Here, three frequencies (f1 to f3) are described as an example.

As shown in Fig. 2, a first cell 311 is provided with a frequency f1. A second cell 312 is provided with a frequency f2. A second cell 313 is provided with a frequency f3.

For example, the first cell 311 is a macrocell 111A or a specific cell 111B provided in the first communication system. The second cell 312 and the second cell 313 are macrocells 211A or specific cells 211B which are provided in the second communication system.

The first cell 311 has a service area overlapping with those of the second cell 312 and the second cell 313, and has a service area substantially same as the second cell 312 and the second cell 313.

In such a cell configuration, the UE 10 may be prohibited from accessing the second cell 312, for example. In such a case, even though the UE 10 with a location registration made in the first cell 311 tries to connect to the second cell 312, a connection to the second cell 312 is not permitted. Accordingly, it is preferable to select the second cell 313 as a connection destination cell.

### (Configuration of Network Apparatus)

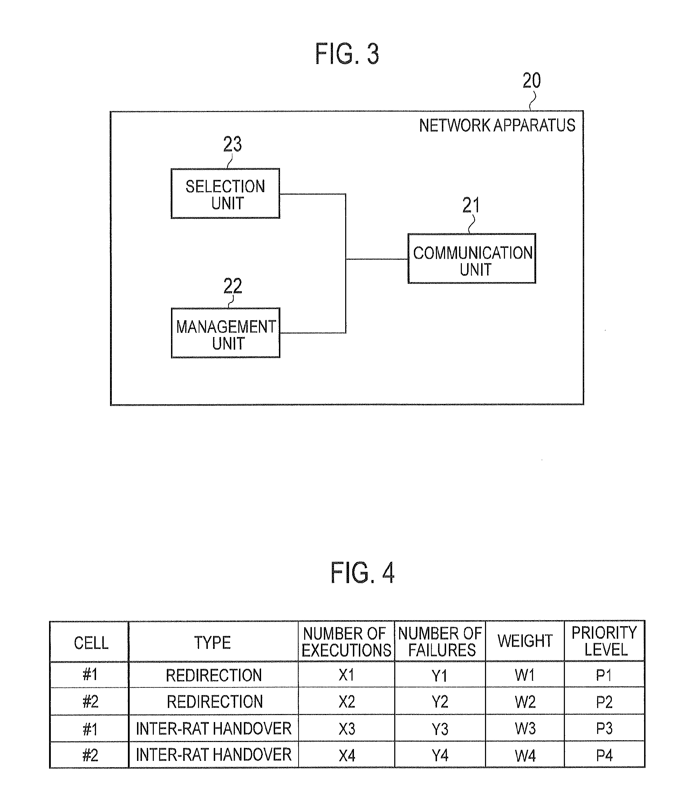

The configuration of the network apparatus according to the first embodiment is described below by referring to the drawings. Fig. 3 is a drawing showing the network apparatus 20 according to the first embodiment. As shown in Fig. 3, the network apparatus 20 has a communication unit 21, a management unit 22, and a selection unit 23.

Note that the network apparatus 20 may be an apparatus (such as NB 110A, eNB 210A) which manages a macrocell. Also, the network apparatus 20 may be an apparatus (such as RNC 120A, SGSN 130, MME 230) provided in an upper level of an apparatus managing a macrocell.

It should be noted that in the following description, a reconnection to the second communication system (LTE) is described as an example. In such a case, the network apparatus 20 is, for example, an RNC 120A.

The communication unit 21 performs communications with the UE 10. Also the communication unit 21 performs communications with other network apparatus.

For example, the communication unit 21 receives a connection request message (e.g., "RRC Connection Request") from the UE 10 visiting the macrocell provided under the network apparatus 20.

Also, the communication unit 21 transmits a connection instruction message instructing the UE 10 to connect with the second communication system. Note that the connection instruction message is a connection rejection message (e.g., "RRC Connection Reject") transmitted to the UE 10 in an idle state according to the connection request message. Or, the connection instruction message is a connection release message (e.g., "RRC Connection Release") transmitted to the UE 10 in a connected state. Or, the connection instruction message is a handover command instructing the UE 10 in the connected state to perform the Inter-RAT handover.

The management unit 22 manages a management table containing information to select a connection destination cell with which the UE 10 is to be connected. Specifically, the management unit 22 manages, in association with each other, each of multiple second cells provided in the second communication system and a priority level weighted depending on whether a connection to each of the multiple second cells has succeeded or failed.

Specifically, the management unit 22 manages a management table shown in Fig. 4. As shown in Fig. 4, in the management table, "cell," "type," "number of executions," "number of failures," "weight," and "priority level" are associated with one another.

The "cell" is information showing the second cell which is provided in the second communication system. The "type" is a type of connection to the second cell. The "type" is, for example, "redirection" or "Inter-RAT handover."

The "number of executions" is the number of trails made to connect to the second cell. The "number of failures" is the number of failures in the connection to the second cell. The "weight" is a value to weight a priority level. The "weight" is, for example, a failure rate at which the connection to the second cell has failed.

The "priority level" is a priority level of selecting as a connection destination cell the second cell associated with the priority level. For example, the priority level is set so that the second cell becomes harder to be selected as a connection destination cell as the failure rate of the connection to the second cell becomes higher.

The selection unit 23 selects a connection destination cell with which the UE 10 is to be connected among the multiple second cells provided in the second communication system. Specifically, the selection unit 23 reads out the priority level associated with each of the multiple second cells by referring to the management table managed by the management unit 22. Subsequently, the selection unit 23 selects a connection destination cell among the multiple second cells based on the priority level associated with each of the multiple second cells.

The selection unit 23 determines that the connection instruction message is not to be transmitted to the UE 10 if there is no connection destination cell. In other words, the connection procedure between the UE 10 and the first communication system is continued. Or, the connection between the UE 10 and the first communication system is maintained.

### (Operation of Mobile Communication System)

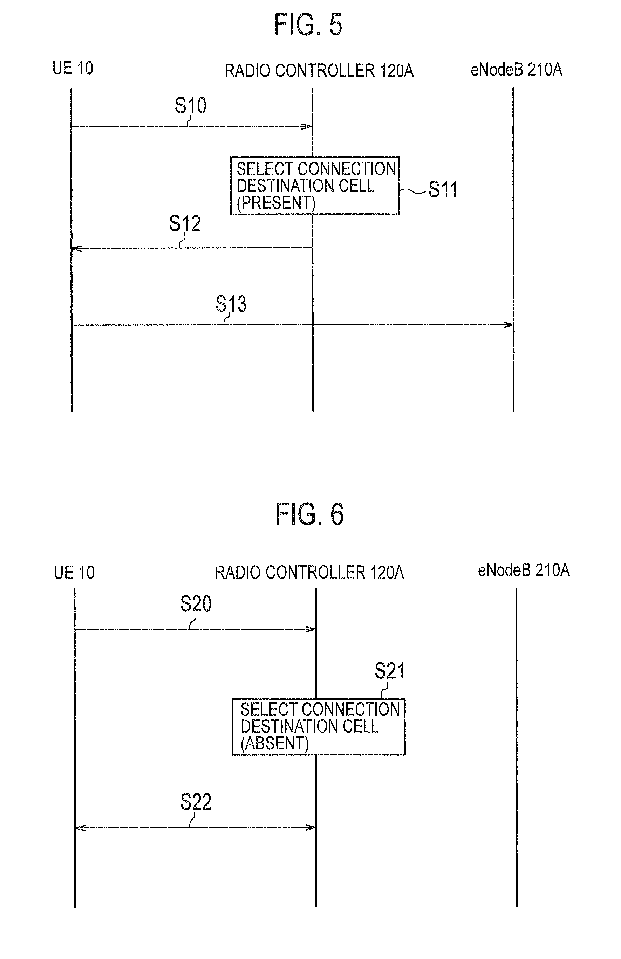

The operation of the mobile communication system according to the first embodiment is described below by referring to the drawings. Figs. 5 to 8 are sequence diagrams, each showing an operation of the mobile communication system according to the first embodiment.

Firstly, described is a case where the UE 10 in the idle state tries to connect to the second communication system. Fig. 5 shows a case where a connection to the second communication system is instructed, while Fig. 6 shows a case where a connection to the second communication system is not instructed.

As shown in Fig. 5, in the case where the connection to the second communication system is instructed, at Step 10, the UE 10 transmits a connection request message (e.g., "RRC Connection Request") to the RNC 120A (i.e., the network apparatus 20).

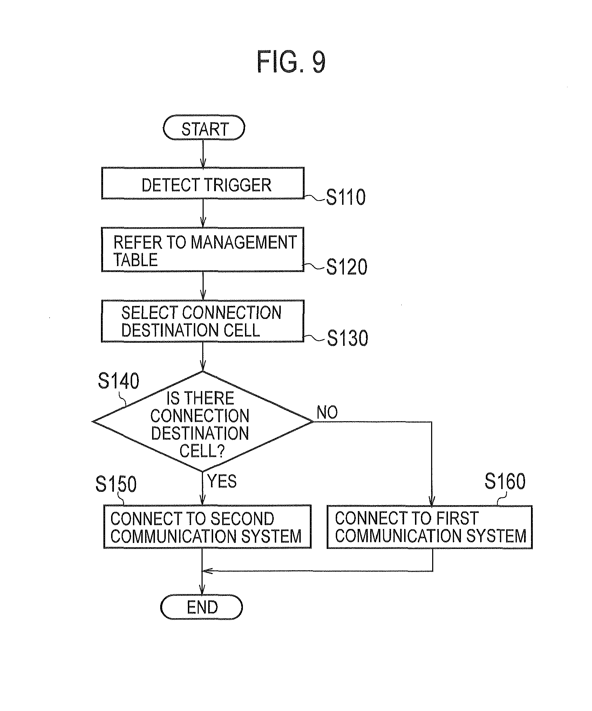

At Step 11, the RNC 120A selects a connection destination cell with which the UE 10 is to be connected among the multiple second cells provided in the second communication system. Specifically, the selection unit 23 selects a connection destination cell among the multiple second cells based on the priority level associated with each of the multiple second cells. Here, the description is given to a case where there is the connection destination cell. Note that the details of Step 11 are described later (see Fig. 9).

At Step 12, the RNC 120A transmits a connection rejection message (e.g., "RRC Connection Reject") to the UE 10 as a connection instruction message.

At Step 13, the UE 10 transmits a connection instruction message instructing a connection to the second communication system (LTE) (redirection or Inter-RAT handover) with respect to the eNB 210A.

As shown in Fig. 6, in the case where the connection to the second communication system is not instructed, at Step 20, the UE 10 transmits a connection request message (e.g., "RRC Connection Request") to the RNC 120A (i.e., the network apparatus 20).

At step 21, the RNC 120A selects a connection destination cell with which the UE 10 is to be connected among the multiple second cells provided in the second communication system. Specifically, the selection unit 23 selects a connection destination cell among the multiple second cells based on the priority level associated with each of the multiple second cells. Here, the description is given to a case where there is no connection destination cell. Note that the details of Step 21 are described later (see Fig. 9).

At Step 22, the RNC 120A establishes a connection (e.g., RRC Connection) between the RNC 120A and the UE 10.

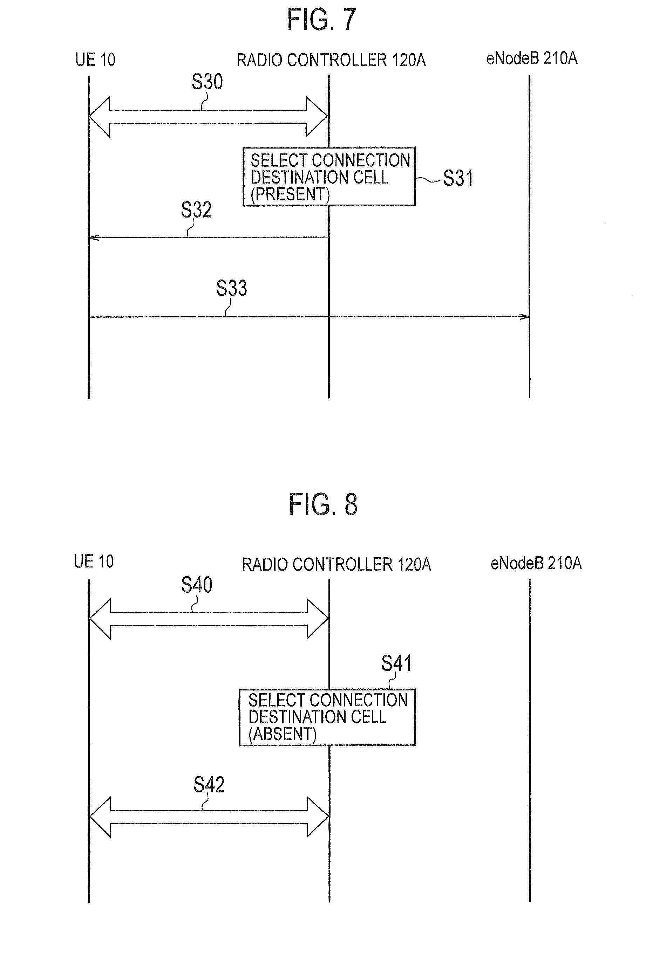

Secondly, the description is given to a case where the UE 10 in a connected state tries to connect to the second communication system. Fig. 7 shows the case where the connection to the second communication system is instructed, while Fig. 8 shows the case where the connection to the second connection communication system is not instructed.

As shown in Fig. 7, in the case where the connection to the second communication system is instructed, at Step 30, the UE 10 performs communications with the first communication system. In other words, the connection (e.g., RRC Connection) is established between the UE 10 and the RNC 120A (i.e., the network apparatus 20).

At Step 31, the RNC 120A selects a connection destination cell with which the UE 10 is to be connected among the multiple second cells provided in the second communication system. Specifically, the selection unit 23 selects a connection destination cell among the multiple second cells based on the priority level associated with each of the multiple second cells. Here, the description is given to the case where there is the connection destination cell. Note that the details of Step 31 are described later (see Fig. 9).

At Step 32, the RNC 120A transmits a connection rejection message (e.g., "RRC Connection Reject") to the UE 10 as a connection instruction message.

At Step 33, the UE 10 transmits a connection instruction message instructing a connection to the second communication system (LTE) (redirection or Inter-RAT handover) with respect to the eNB 210A.

As shown in Fig. 7, in the case where the connection to the second communication system is not instructed, at Step 40, the UE 10 performs communications with the first communication system. In other words, a connection (e.g., RRC Connection) is established between the UE 10 and the RNC 120A (i.e., the network apparatus 20).

At Step 41, the RNC 120A selects a connection destination cell with which the UE 10 is to be connected among the multiple second cells provided in the second communication system. Specifically, the selection unit 23 selects a connection destination cell among the multiple second cells based on the priority level associated with each of the multiple second cells. Here, the description is given to the case where there is no connection destination cell. Note that the details of Step 41 are described later (see Fig. 9).

At Step 42, the connection (e.g., RRC Connection) between the RNC 120A and the UE 10 is maintained.

### (Operation of Network Apparatus)

An operation of the network apparatus according to the first embodiment is described below by referring to the drawings. Fig. 9 is a flowchart showing an operation of the network apparatus 20 according to the first embodiment. Here, the description is given to an operation of the RNC 120A (i.e., the network apparatus 20) at Step 11, Step 21, Step 31 and Step 41.

As shown in Fig. 9, at Step 110, the RNC 120A detects a trigger for determining whether to instruct a connection to the second communication system. For example, the RNC 120A detects a connection request message (e.g., "RRC Connection Request") from the UE 10 in an idle state. Or, the RNC 120A detects that an amount of interference received by the UE 10 in a connected state exceeds a predetermined amount of interference.

At Step 120, the RNC 120A referrers to the management table managed by the management unit 22. Specifically, the RNC 120A reads out the priority level associated with each of the multiple second cells provided in the second communication system.

At Step 130, the RNC 120A selects a connection destination cell among the multiple second cells based on the priority level associated with each of the multiple second cells.

At Step 140, the RNC 120A determines if there is a connection destination cell. When there is a connection destination cell, the RNC 120A proceeds to processing at Step 150. When there is no connection destination cell, the RNC 120A proceeds to processing at Step 160.

At Step 150, the RNC 120A determines that the UE 10 is to be connected with the second communication system. In other words, the RNC 120A determines that the connection instruction message instructing the connection to the connection destination cell selected at Step 130 is to be transmitted to the UE 10.

At Step 160, the RNC 120A determines that the UE 10 is to be connected with the first communication system. In other words, the RNC 120A determines that the connection instruction message is not to be transmitted to the UE 10.

### (Method of Updating Priority Level)

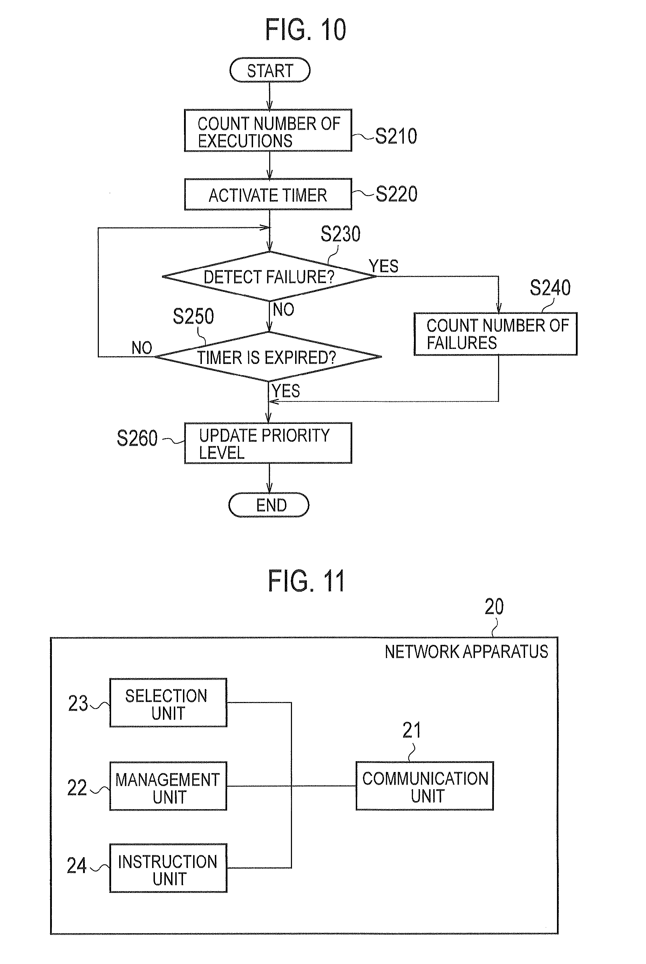

A method of updating the priority level according to the first embodiment is described below by referring to the drawings. Fig. 10 is a flowchart showing an operation of the network apparatus 20 according to the first embodiment. Note that the flowchart shown in Fig. 10 shows the operation after the connection instruction message is transmitted to the UE 10.

As shown in Fig. 10, at Step 210, the network apparatus 20 counts the number of transmitting the connection instruction message (i.e., the number of executing the redirection or Inter-RAT handover).

At Step 220, the network apparatus 20 activates a timer in which a determination time is set.

At Step 230, the network apparatus 20 determines if a failure of the connection (the redirection or Inter-RAT handover) to the second communication system has been detected. For example, when the connection request message (e.g., "RRC Connection Request") is received from the UE 10, the network apparatus 20 detects the failure of the redirection or Inter-RAT handover. When the failure of the redirection or Inter-RAT handover is detected, the step proceeds to processing at Step 240. When the failure of the redirection or Inter-RAT handover is not detected, the step proceeds to processing at Step 250.

At step 240, the network apparatus 20 counts the number of failures of the redirection or Inter-RAT handover.

At step 250, the network apparatus 20 determines if the timer in which the determination time is set at Step 220 times out. When the timer times out, the network apparatus 20 proceeds to processing at Step 260. When the timer does time out yet, the step returns to the processing at Step 230.

At Step 260, the network apparatus 20 updates the "weight" shown in Fig. 4 together with the "priority level" shown in Fig. 4 based on the update result of the number of failures.

Note that although it is not shown in Fig. 10, when the timer has timed out, the network apparatus 20 may count the number of success of the redirection or Inter-RAT handover.

### (Advantageous Effects)

In the first embodiment, the network apparatus 20 (the selection unit 23) selects a connection destination cell with which the UE 10 is to be connected based on the priority level weighted depending on whether the connection to each of the multiple second cells provided in the second communication system has succeeded or failed. Accordingly, occurrence of repeated trials to connect to a handover target communication system can be suppressed though such trials would occur with inappropriate selection of a connection destination cell even in a state where there is no failure or congestion in the handover target communication system. This can suppress deterioration in the connectivity of the UE 10 to the communication system.

### [Modification 1]

Modification 1 of the first embodiment is described below by referring to the drawings. In the following description, portions different from those of the first embodiment are mainly described.

Specifically, in Modification 1, a network apparatus 20 transmits a quality measurement instruction instructing a UE 10 to measure a quality of a second communication system before trying to connect to the second communication system.

### (Configuration of Network Apparatus)

The configuration of the network apparatus according to Modification 1 is described below by referring to the drawings. Fig. 11 is a drawing showing the network apparatus 20 according to Modification 1. As shown in Fig. 11, the network apparatus 20 has an instruction unit 24 in addition to the configuration shown in Fig. 3.

The instruction unit 24 instructs the UE 10 to measure a quality of the second communication system (a connection destination cell) upon detection of a trigger for determining whether or not to instruct a connection to the second communication system. Specifically, the instruction unit 24 instructs a communication unit 21 to transmit a quality measurement instruction to the UE 10.

The above-described communication unit 21 receives a quality measurement result transmitted from the UE 10 according to the quality measurement instruction. The quality measurement result is, for example, a receiving quality (such as SIR (Signal to Interference Ratio)) of a pilot transmitted from a connection destination cell being provided in the second communication system.

The above-described selection unit 23 determines whether or not to send the UE 10 a connection instruction message instructing a connection to the second communication system, based on whether the quality measurement result meets a predetermined quality.

Specifically, the selection unit 23 determines that the connection instruction message is to be sent to the UE 10 when the quality measurement result meets the predetermined quality. On the other hand, the selection unit 23 determines that the connection instruction message is not to be sent to the UE 10 when the quality measurement result does not meet the predetermined quality. In other words, even when the connection destination cell exists, the selection unit 23 determines that the connection instruction message is not to be sent to the UE 10 when the quality measurement result does not meet the predetermined quality.

### (Operation of Network Apparatus)

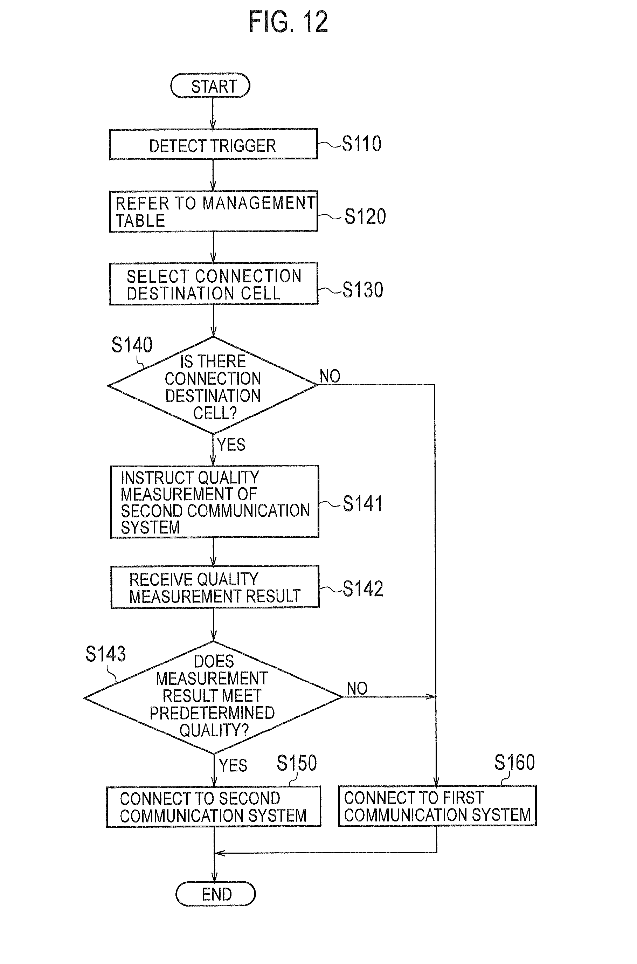

An operation of the network apparatus according to Modification 1 is described below by referring to the drawings. Fig. 12 is a flowchart showing an operation of the network apparatus 20 according to Modification 1. Here, as similar to Fig. 9, the description is given to an operation of a RNC 120A (i.e., the network apparatus 20) at Step 11, Step 21, Step 31 and Step 41.

Note that in Fig. 12, process steps similar to those of Fig. 9 are given similar step numbers. Specifically, in Fig. 12, Step 141 to Step 143 are added to the processing shown in Fig. 9.

As shown in Fig. 12, at Step 141, the RNC 120A instructs the UE 10 to measure a quality of the second communication system (the connection destination cell). Specifically, the RNC 120A transmits a quality measurement instruction to the UE 10.

At Step 142, the RNC 120A receives a quality measurement result of the second communication system (the connection destination cell) from the UE 10.

At Step 143, the RNC 120A determines if the quality measurement result meets a predetermined quality. When the quality measurement result meets the predetermined quality, the RNC 120A proceeds to processing at Step 150. When the quality measurement result does not meet the predetermined quality, the RNC 120A proceeds to processing at Step 160.

### [Other Embodiments]

The present invention has been described by using the above-described embodiment. However, it should not be understood that the description and the drawings, which constitute one part of this disclosure, are to limit the present invention. Various alternative embodiments, examples, and operational techniques will be obvious for those who are in the art from this disclosure.

In the above-described embodiment, the first communication system is a communication system supporting UMTS and the second communication system is a communication system supporting LTE. In other words, the connection to LTE (the redirection or Inter-RAT handover) is described. However, the embodiment is not limited to that configuration. Specifically, the first communication system may be a communication system supporting LTE and the second communication system may be a communication system supporting UMTS. In other words, the present invention may be applied to a connection to UMTS (the redirection or Inter-RAT handover). Furthermore, the second communication system may be a communication system having other RAT (Radio Access Technology) such as Wi-MAX.

Although it is not described in the above-described embodiment, the network apparatus 20 may determine if the UE 10 has an ability to connect with the second communication system.

The above-described embodiment illustrates the case where the configuration (the communication unit 21, the management unit 22, the selection unit 23, and the instruction unit 24) provided in the network apparatus 20 is provided in one apparatus. However, the embodiment is not limited to that configuration. In other words, the communication unit 21, the management unit 22, the selection unit 23, and the instruction unit 24 may be provided in other apparatuses, respectively.

Control signals such as RANAP (Radio Access Network Application Part), NBAP (Node B Application Part), RNSAP (Radio Network Subsystem Application Part), and HNBAP (Home Node B Application Part) are used in communications between respective apparatuses.

Note that the operation of the network apparatus 20 may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the network apparatus 20. Also, the storage medium and the processor may be provided in the network apparatus 20 as a discrete component.

Note that the entire content of Japanese Patent Application No. 2010-011185 (filed on January 21, 2010) is incorporated herein by reference.

### INDUSTRIAL APPLICABILITY

The present invention can provide a mobile communication system, a network apparatus, and a mobile communication method, which can suppress deterioration in the connectivity of the mobile communication terminal to the communication system. Thus, the present invention is useful in a radio communication and the like.

### EXPLANATION OF THE REFERENCE NUMERALS

10... mobile terminal device, 20... network apparatus, 21... communication unit, 22... management unit, 23... selection unit, 24... instruction unit, 50... core network, 100... mobile communication system, 110A... NB, 110B... HNB, 111A... macrocell, 111B... specific cell, 120A... RNC, 120B... HNB-GW, 130... SGSN, 210A... eNB, 210B... HeNB, 211A... macrocell, 211B... specific cell, 220B... HeNB-GW, 230... MME, 311... first cell, 312, 313... second cell

## Claims

1. A mobile communication system having a mobile communication terminal, a first communication system, and a second communication system, wherein the first communication system comprises
a management unit configured to manage each of a plurality of second cells provided in the second communication system and a priority level in association with each other, the priority level weighted depending on whether a connection to each of the plurality of second cells has succeeded or failed, and
a selection unit configured to select a connection destination cell with which the mobile communication terminal is to be connected among the plurality of second cells based on the priority level associated with each of the plurality of second cells.

2. The mobile communication system according to claim 1, wherein the first communication system further comprises
a transmission unit configured to send the mobile communication terminal a quality measurement instruction instructing the mobile communication terminal to measure a quality of the connection destination cell before trying to connect to the second communication system, and
a reception unit configured to receive a quality measurement result of the connection destination cell from the mobile communication terminal.

3. The mobile communication system according to claim 1, wherein the connection to the second communication system is an Inter-RAT handover from the first communication system to the second communication system.

4. The mobile communication system according to claim 1, wherein the connection to the second communication system is a redirection to the second communication system.

5. A network apparatus provided in a first communication system in a mobile communication system having a mobile communication terminal, the first communication system, and a second communication system, the network apparatus comprising:
a management unit configured to manage each of a plurality of second cells provided in the second communication system and a priority level in association with each other, the priority level weighted depending on whether a connection to each of the plurality of second cells has succeeded or failed, and
a selection unit configured to select a connection destination cell with which the mobile communication terminal is to be connected among the plurality of second cells based on the priority level associated with each of the plurality of second cells.

6. A mobile communication method applied to a mobile communication system having a mobile communication terminal, a first communication system, and a second communication system, the mobile communication method comprising the steps of:
managing each of a plurality of second cells provided in the second communication system and a priority level in association with each other, the priority level weighted depending on whether a connection to each of the plurality of second cells has succeeded or failed, and
selecting a connection destination cell with which the mobile communication terminal is to be connected among the plurality of second cells based on the priority level associated with each of the plurality of second cells.
